# EUROPEAN PATENT SPECIFICATION

(11) **EP 2 261 065 B1**
(45) Date of publication and mention of the grant of the patent: **13.03.2013**
(21) Application number: 10161520.1
(22) Date of filing: 29.04.2010
(51) Int. Cl.: B60C 15/028

(54) **Bead lock device**
Wulststoppervorrichtung
Dispositif de verrouillage du talon de pneu

(30) Priority: 02.06.2009 US 183491 P
(43) Date of publication of application: 15.12.2010
(73) Proprietor: Scott, Steven Richard, Belmont CA 94002 (US)
(72) Inventor: Scott, Steven Richard, Belmont CA 94002 (US)
(74) Representative: Kensett, John Hinton

(56) References cited:
- GB-A- 124 863
- GB-A- 191 001 678
- GB-A- 191 025 082
- US-A- 2 393 494
- US-A- 3 965 957

## Description

### TECHNICAL FIELD

The present invention relates generally to devices for stabilizing the position of rotary mechanical parts and more particularly for stabilizing the position of an inflatable tire and tube with respect to the wheel of a wheeled vehicle.

### BACKGROUND ART

A rim lock is a clamping device that clamps the bead of the tire to the outer "rim" area of the wheel. Its primary purpose is to prevent the tire from rotating on the rim during hard acceleration or deceleration (the acceleration and deceleration torque is applied from the rim to the tire or from the tire to the rim). They are normally used only on off road (dirt bikes) because the tires have knobs on them that prevent the tire from slipping easily and because the tire pressure used on dirt bikes is much lower than on street bikes. The pressure exerted by the inner tube against the side of the tire that presses the side of the tire against the rim of the wheel is not always sufficient to keep the tire from rotating around the rim under hard acceleration or hard deceleration (braking).

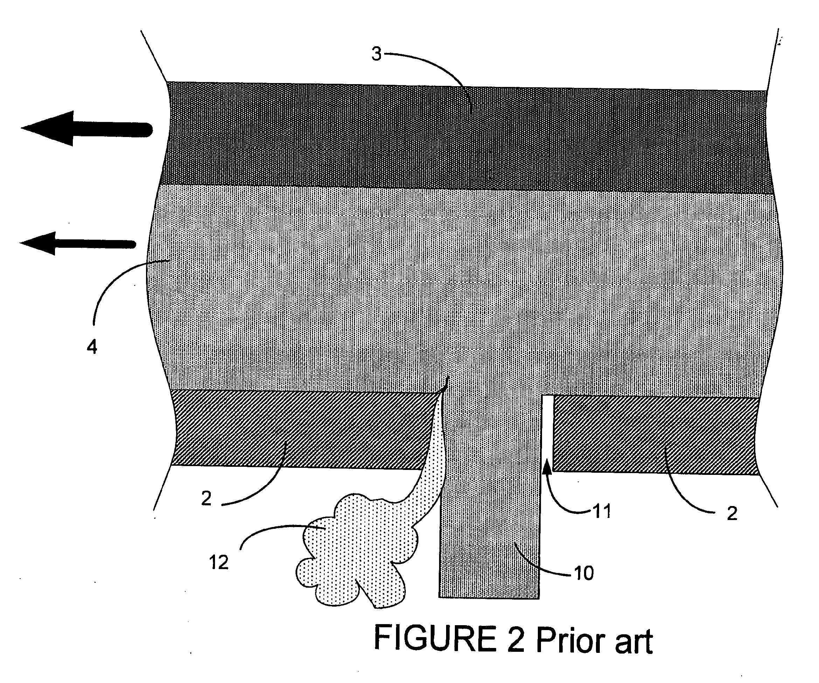

Fig. 2 shows a block schematic view of a tire **3** on a wheel **2** of the prior art which is not secured by a rim lock. The tire **3** under stress of acceleration and deceleration is allowed to rotate with regard to the wheel **2,** as indicated by the direction arrow, which also drags along the inflatable tube **4,** due to friction between the tire **3** and the tube **4**. This forces the tube valve stem **10** of the tire **4** against the walls of the valve stem port **11,** putting pressure on the tube valve stem **10** which can result in a rupture or blowout **12.**

In any kind of cycling, the weight and balance of the wheels is an important factor. Reduced weight is generally desirable, as it requires less energy by the cyclist to accelerate the overall cycle. Proper weight balance is also important to reduce vibration of the wheel as it rotates.

Normally, rim locks are used only on dirt bikes that go fairly slowly and there is little need to balance the wheels to offset the weight of the rim lock. However, the number of "dual purpose" bikes is increasing dramatically in recent years and these vehicles are used both off road and on the street, including freeway use. People often use rim locks on dual purpose bikes, and if that is done, one needs to balance the wheel to prevent excessive vibration at freeway speed. Unless counterbalancing wheel weights are installed, an unbalanced wheel will generate considerable vibration as the bike speed goes up.

Because rim locks normally have considerable weight, the amount of balancing weights that must be applied to the opposite side of the wheel is considerable too. However, by adding more mass in the form of counter balancing wheel weights, the rotating mass of the wheel and tire assembly is increased and this negatively affects acceleration and handling. Thus, reducing the weight of the rim lock is beneficial because it reduces the degree to which the wheel is thrown out of balance and also because it reduces the amount of counterbalancing wheel weights that much be applied to bring the wheel back into balance.

Thus, there is a need for rim locks which are lighter in weight.

The rim locks are subjected to a great deal of load and must be able to apply considerable pressure against the tire bead to lock it against the rim of the tire. This requires a high tensile strength. The teeth on the side of the rim lock must hold their shape so they don't just twist and let the tire loose under heavy loads. Lastly, the material may be subject to heavy impact if the tire hits a rock or other object and it needs to be able to handle that as well.

To answer these strength concerns, traditionally, rim locks are made out of steel or aluminum. However, these materials have generally high density, and thus are fairly heavy for their size, which increases the weight and balancing problems discussed above.

Thus, there is a need for rim locks that are lighter in weight, but which also are configured with sufficient tensile strength to hold their shape and resist failure under heavy load conditions and are tough enough to handle hard impacts when riding over rocks and other obstacles that may be encountered in off road riding conditions.

US 3,965,957A, GB 124,863A, US 2,393,494A, GB 25,082A and GB 1678A show rim lock structures

### DISCLOSURE OF INVENTION

Briefly, one preferred embodiment of the present invention is a rim lock device, having a main body having an outer surface, and a bolt. The outer surface of the main body includes a plurality of recesses which are configured into a matrix structure.

Also another preferred embodiment of the present invention is a rim lock device, having a main body with a body front wall and a body rear wall having teeth, which are tapered and angled teeth.

Also disclosed is a method of locking the position of a tire bead from rotating relative to a wheel rim during acceleration and deceleration.

An advantage of the present invention is that it is lighter in weight than prior rim locks.

Another advantage of the present invention is that it includes angled teeth, which provide a better grip on a vehicle tire.

And another advantage of the present invention is that it can be injection molded from nylon materials which allows for reduced manufacture costs.

A further advantage of the present invention is that it includes a matrix structure which is lighter in weight than previous rim locks and which has very high strength properties.

A yet further advantage of the present invention is that it includes a surface web which improves the strength of the matrix structure.

Another advantage of the present invention is that it is configured with angled portions which aid in gripping the tire and guiding the inflatable tube to seat properly.

Yet another advantage of the present invention is that the curved design of the face of the device eliminates the need for a rubber overmold or like process to guide the inner tube back onto the wheel rim and prevent damage to the tube.

These and other objects and advantages of the present invention will become clear to those skilled in the art in view of the description of the best presently known mode of carrying out the invention and the industrial applicability of the preferred embodiment as described herein and as illustrated in the several figures of the drawings.

### BRIEF DESCRIPTION OF THE DRAWINGS

The purposes and advantages of the present invention will be apparent from the following detailed description in conjunction with the appended drawings in which:
FIG. 1 shows an isometric view of the rim lock device of the present invention in position on a vehicle wheel;
FIG. 2 shows a schematic detail view of a wheel of the prior art which does not use a rim lock;
FIG. 3 shows a top plan view of rim lock device of the present invention in position on a vehicle wheel;
FIG. 4 shows an isometric bottom view of the rim lock device of the present invention;
FIG. 5 shows an isometric top view of the rim lock device of the present invention; and
FIG. 6-7 show bottom plan views of the rim lock device of the present invention.

### DETAILED DESCRIPTION OF THE PREFERRED EMBODIMENTS

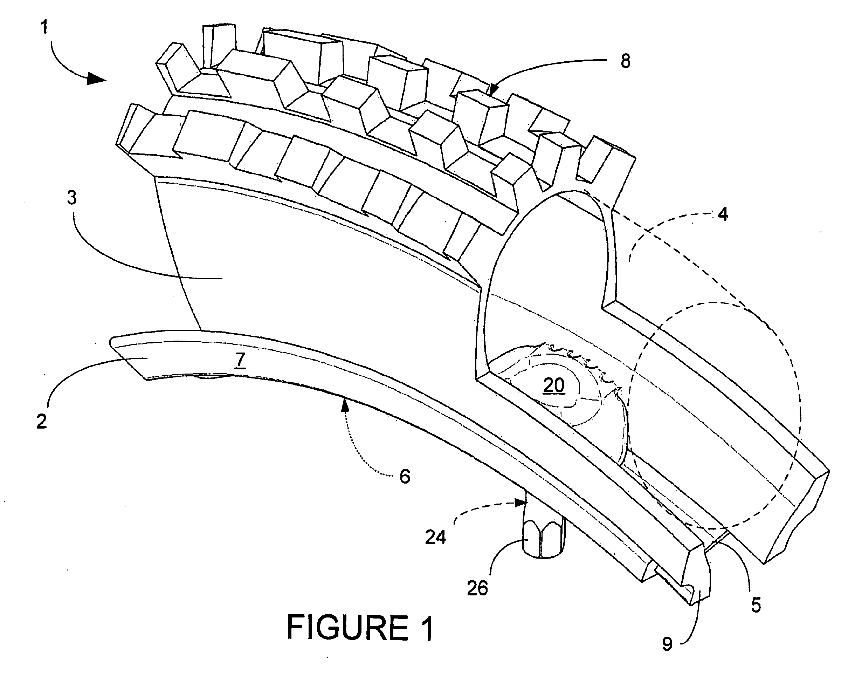

The present invention is a rim lock device, which will be referred to by the reference number **20,** and thus shall be referred to as rim lock **20.** A preferred embodiment of the rim lock **20** is illustrated in Figs. 1, and 3-7. For purposes of the following discussion, regarding concentric elements or surfaces, the term "inner" shall refer to an element closer to the axis of rotation of the wheel, or axis of symmetry of the rim lock, and "outer" shall refer to those elements which are farther away from these axes.

Generally speaking, the rim lock is a clamping device that clamps the bead of the tire to the outer "rim" area of the wheel. Its primary purpose is to prevent the tire from rotating on the rim during hard acceleration or deceleration (the acceleration and deceleration torque is applied from the rim to the tire or from the tire to the rim). The pressure exerted by the inner tube that presses the side of the tire against the rim of the wheel is not always sufficient to keep the tire from rotating around the rim under hard acceleration or hard deceleration (braking). Movement of the tire on the rim can result in stress on the valve stem of the inflatable tube and in the case of a flat tire the slippage may be so great on the rear wheel that it may prevent the motorcycle from moving forward and/or come off the rim. Thus, the rim lock is a device used on the front and rear wheels of motorcycles to "sandwich" the bead of the tire between the rim lock device and the rim so that the tire does not rotate on the rim under acceleration or braking, particularly when the tire is being run with low air pressure or when completely flat.

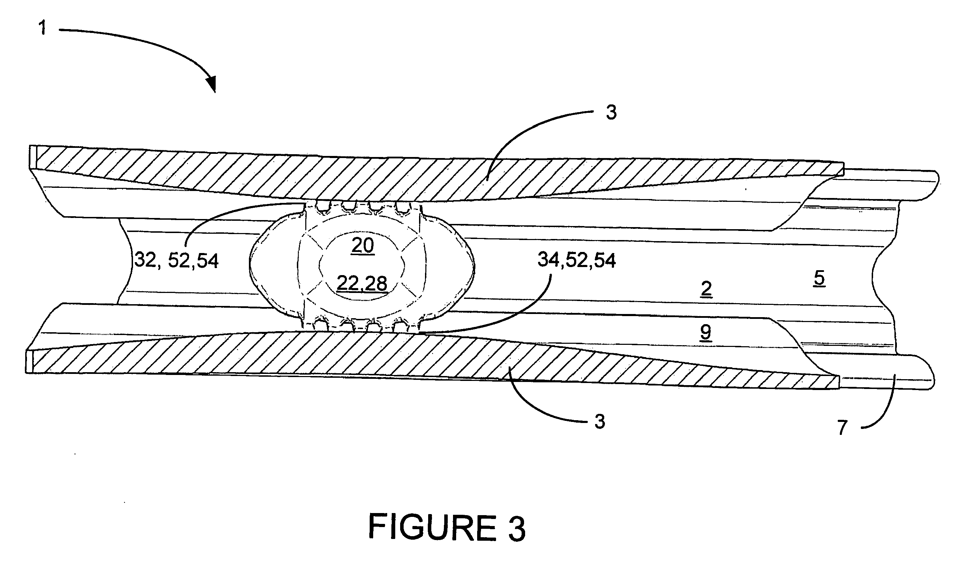

Figs. 1 and 3 show the rim lock **20** used in context on a vehicle wheel assembly with rim lock **1.** The wheel assembly **1** with rim lock **20** includes a wheel **2,** a tire **3,** an inflatable tube **4,** (shown only in dashed outline in Fig. 1) and a rim lock **20.** The wheel **2** is configured with an outer surface **5,** an inner surface **6,** and a wheel rim **7.** A tire **3** has a tread surface **8,** and a tire bead **9,** which is captured by the wheel rim **7.** The inflatable tube **4** is has been removed from the view, and indicated in dashed lines in order to provide better visibility. This inflatable tube **4** is positioned between the tire **3** and the wheel **2** and includes a valve stem **10** (see Fig. 2) which extends through a valve stem port **11** (see Fig. 2) in the wheel **2,** extending in a direction towards the axle of the vehicle (not shown). The rim lock **20** is shown mounted in position on the wheel **2,** and its interaction with the other elements of the wheel assembly **1** will be discussed below.

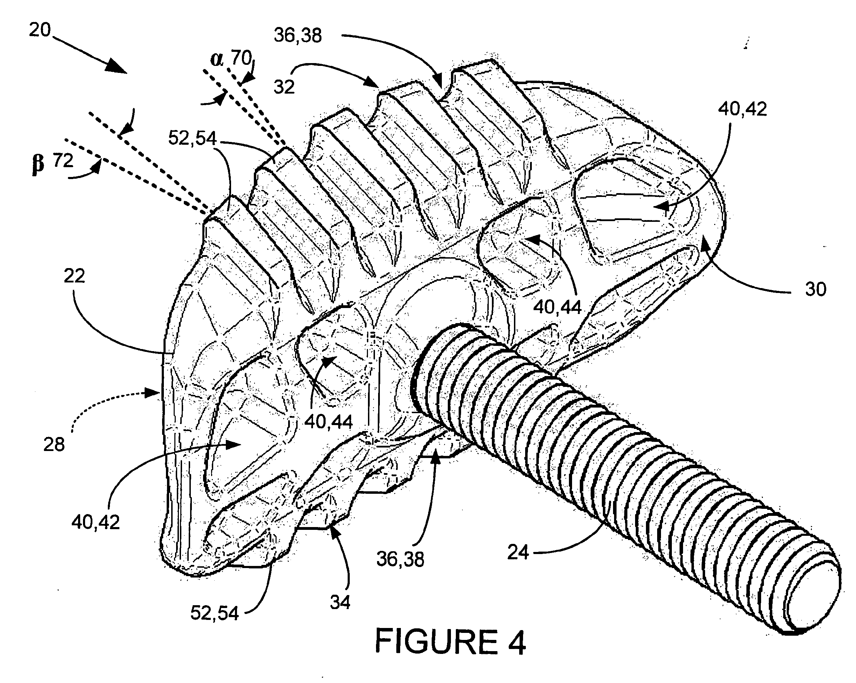

Generally, the rim lock **20** alone is shown in more detail in Figs. 4-7. The rim lock **20** includes a main body **22** and a bolt **24,** to which a nut **26** (see Fig. **1**) may be attached. The body **22** has an outer surface **28,** an inner surface **30,** body front wall **32** and body rear wall **34** (although, if the rim lock body **22** is preferably symmetrical about a horizontal axis, the terms "front wall" and "rear wall" are arbitrary). The body front wall **32** and body rear wall **34** are preferably configured with recesses **36,** presently preferred to be configured as channels **38.** There are presently preferred to be four channels, in each of the body front wall **32** and body rear wall **34,** but this is not to be construed as a limitation. The inner surface **30** is also preferably configured with recesses **40,** which are preferred to include enlarged outer recesses **42,** located outward radially further from the central bolt **24,** and smaller inner recesses **44** located inward radially closer to the central bolt **24.**

Generally, the rim locks are subjected to a great deal of load and must be able to apply considerable pressure against the tire bead to lock it against the rim of the tire. This requires a high tensile strength. The teeth on the side of the rim lock must hold their shape so they don't just twist and let the tire loose under heavy loads. Lastly, the material may be subject to heavy impact if the tire hits a rock or other object and it needs to be able to handle that as well. Thus, the material must have high properties of strength and toughness, where toughness is defined as a material's ability to absorb impacts as measured in an Izod test

However, as discussed above, the weight and balance of the wheels is an important factor. Reduced weight is generally desirable, as it required less energy from the engine of the cycle to accelerate the cycle. Proper weight balance is also important to reduce vibration of the wheel as it rotates. Reducing the weight of the rim lock is very useful because the rim lock by itself is an unbalanced weight located at one spot on the wheel. Unless counterbalancing wheel weights are installed, an unbalanced wheel will generate considerable vibration as the bike speed goes up.

Because rim locks normally have considerable weight, the amount of balancing weights that must be applied to the opposite side of the wheel is considerable too. However, by adding more mass in the form of counter balancing wheel weights, the rotating mass of the wheel and tire assembly is increased and this negatively affects acceleration and handling. Thus, reducing the weight of the rim lock is beneficial not only because it reduces the degree to which the wheel is thrown out of balance, but also because it reduces the amount of counterbalancing wheel weights that much be applied to bring the wheel back into balance.

Thus, the material used in the rim locks was chosen for the properties of high strength and toughness while having as little weight as possible. Traditionally, rim locks are made out of steel or aluminum. The inventor was specifically looking for a material that was equal or greater in strength to aluminum with less weight and that could be injection molded to reduce cost over die casting. It was determined that the material should preferably have a density of 1.12 to 1.50 g/cm³ as well as an impact strength greater than 50kj/m². Due to the extreme loads that can be applied to a rim lock, it was necessary to use a material with a tensile modulus greater than 300 kpsi. There are several materials that possess this combination of properties. The currently preferred materials include Nylon 66 (Polyamide 66) plastic material with filler and Dupont Zytel which is a proprietary formulation of Nylon 66 made by Dupont.

Glass filled nylon is impact resistant (more so than regular nylon). It is structurally stronger and stiffer than ABS or regular nylon and shows tittle thermal expansion (essential to maintain the cast in place attacking bolt during long hard rides that heat up the tire and inner tube). Most importantly, in some formulations of the material, it is lighter than aluminum and yet has sufficient strength to do the job as well as the aluminum rim jock. Zytel is Dupont's proprietary formulation for glass filled nylon that makes it stronger than regular Nylon66. Dupont offers Zytel in a wide variety of formulations. Zytel is rated with a tensile modulus at approximately 1520kpsi, as well as a impact strength of 80kj/m² and having a material density of 1.39 g/cm³, thus being well within the range of desirable properties.

Another material that could be used is Kevlar filled Nylon.

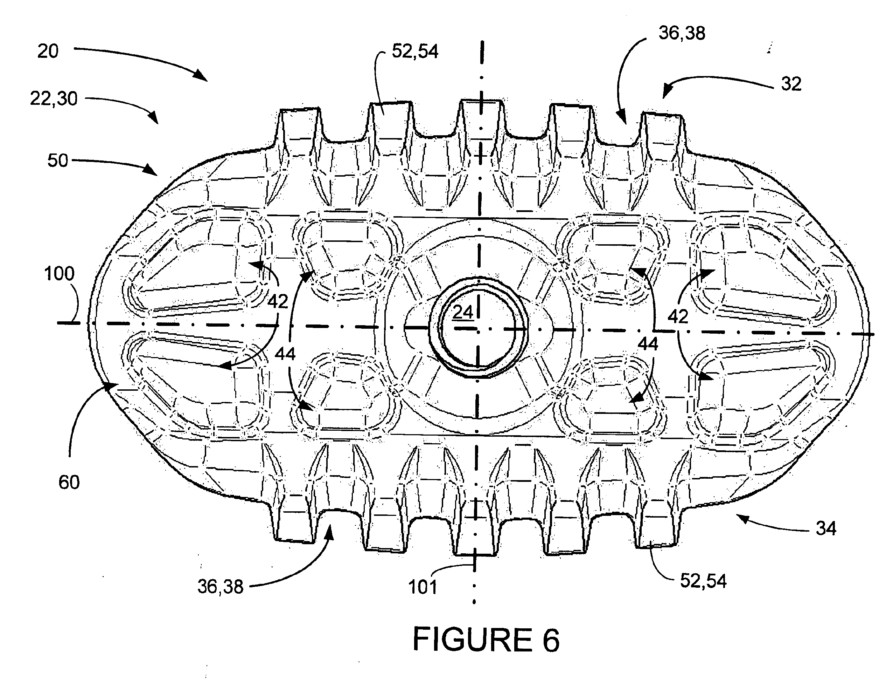

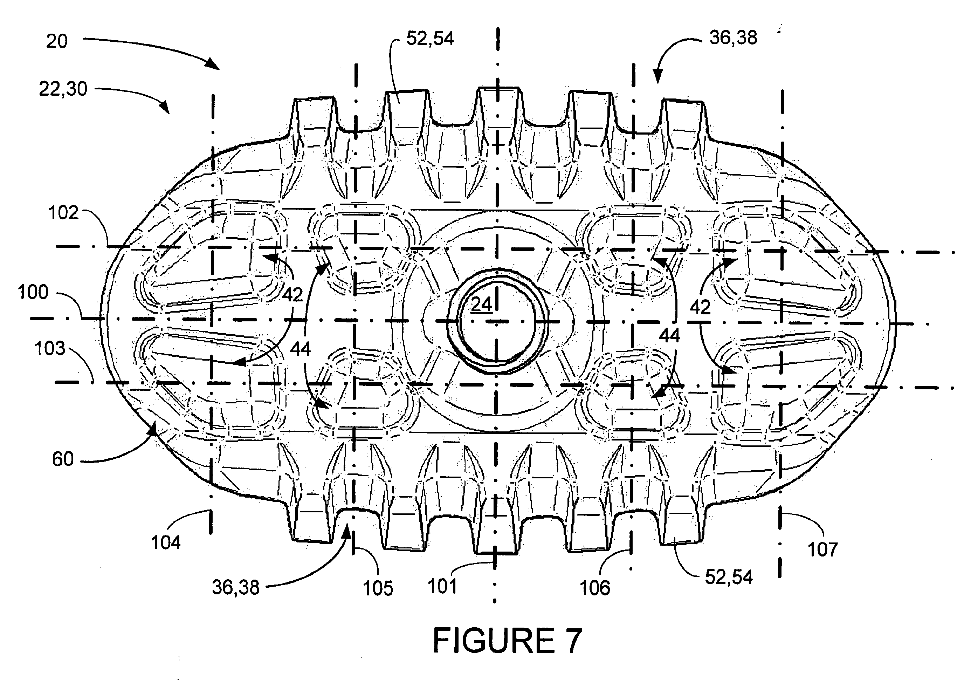

In addition to the selection of the material, the physical construction of the rim lock was carefully designed for the strength and reduced weight of the final product. The structure of body **22** of the rim lock **20** is shown particularly in Figs. 6 and 7, which are bottom plan views of the device. The body **22** preferably has a generally ovoid shape **50,** which is designed to have both utilitarian and aesthetic purposes. The shape and look of the rim lock **20** is streamlined and shaped in an attractive flowing way, which makes the product look interesting and attractive to consumers. It also eliminates sharp edges that could puncture or abrade the inflatable tube **4** (see Fig.1).

The recesses **36** and recess channels **38** referred to above create ribs or teeth **52,** which are preferably angled teeth **54,** as can be best seen from Fig. 4. These angled teeth **54** are specially configured to hold the tire **3** in place more securely than previous rim locks. Previous aluminum rim locks have teeth on each side to dig in and hold the bead in place. On previous rim locks these teeth have a uniform rectangular shape. However, the angled teeth **54** of the present invention are preferably tapered (V shaped) and are also designed to act as a wedge. This allows the rim lock **20** to maximize the bite into the sides of the tire **3** while retaining a high level of strength and durability. There are two angles involved in the shape of the angled teeth 54, which are indicated in Fig. 4 as angle a **70** referring to the tapered, V-shape of the teeth, and angle β **72,** referring to the wedge aspect. Angle α **70** preferably lies in the range of 3 degrees to 8 degrees, and angle β **72** preferably lies in the range of 15 degrees to 30 degrees. The presently preferred values, as shown in Fig. 6 are approximately 5 degrees for angle α **70,** and 20 degrees for angle β **72.**

Figs. 6 and 7 show bottom plan views of the rim lock **20** with horizontal center line **100** and vertical center line **101.** The rim lock **20** is preferably symmetrical about both of these axes, which simplifies the design, and makes it unnecessary to position the rim lock **20** in any particular orientation on the wheel **2.** This is however not to be construed as a limitation, and asymmetrical designs are also contemplated by the present invention.

In order to reduce the weight of the rim lock **20,** outer and inner recesses **42, 44** have been fashioned in the body inner surface **30.** The recesses closer to vertical centerline **101** have been designated as inner recesses **44** and recesses farther from the vertical centerline **101** have been designated as outer recesses **42.**

As seen in Fig. 7, the inner recesses **44** and outer recesses **42** are preferably aligned with further horizontal reference lines **102** and **103,** in a symmetrical manner with a set of four recesses **42, 44** positioned near a second horizontal reference line **102,** above the horizontal centerline **100,** and another set of four recesses **42, 44** positioned near a third horizontal reference line **103,** below the horizontal centerline **100.** The recesses **42,44** can also be regarded as being aligned with four additional vertical reference lines **104, 105, 106** and **107.** The outer recesses **42** are preferably aligned with vertical reference lines **104** and **107,** which are symmetrically arranged with reference to the vertical centerline **101.** The inner recesses **44** are preferably similarly aligned with vertical reference lines **105** and **106,** which are also symmetrically arranged with reference to the vertical centerline **101.** This arrangement is preferred, but is not to be construed as a limitation.

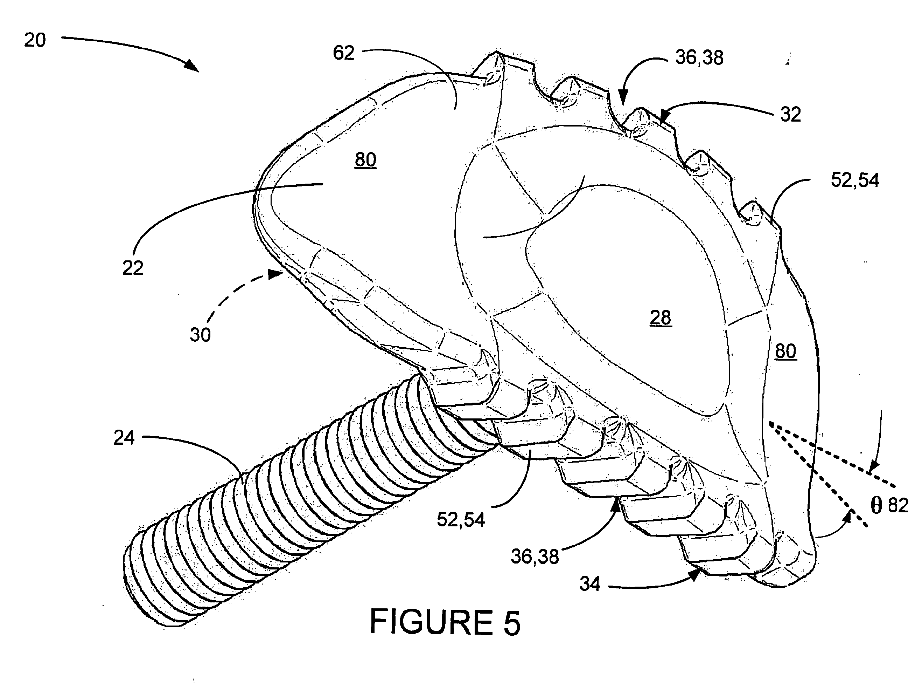

This arrangement of recesses **42, 44** and the surrounding material of the body **22** can be thought of as a matrix **60.** The recesses **42, 44** are designed to reduce the overall weight of the rim lock **20,** but must be carefully configured to leave enough body material **22** for good structural strength. The recesses **42, 44** are also carefully configured so that they do not extend completely through the body material **22** to make complete through-holes. The body outer surface **30** is left intact and can be regarded as a surface web **62** (see Fig. 5).

The matrix structure **60** was designed to transfer the maximum compression load into the center of the rim lock **20,** thereby minimizing the tensional load on the outer surface **30.** This is further reinforced by the thin surface web of material **62** which both increases the strength greatly and reduces the wear on the inflatable inner tube of the tire. A standard grid type matrix does reduce weight, but does little to transfer the load and creates a weak point that could cause the rim lock to fail.

It will be appreciated that the choice of material will greatly influence the configuration of the matrix structure **60** which can be used. The matrix structure **60** shown is the result of considerable design effort in balancing competing variables of strength and weight, and the present invention **20** is assertedly novel in view of these considerations, as well as fulfilling a great need, as discussed above. By making the rim lock **20** out of nylon it ends up being much lighter than an aluminum or steel rim lock, as used in previous rim locks. Since the present invention rim lock **20** is lighter, then counterweights used for balancing the wheel can also be lighter, thus further decreasing the overall weight of the wheel. This leads to better performance for the vehicle overall.

The number and size of the recesses **42, 44** that can be fashioned in the rim lock body **22** without endangering the performance of the rim lock **20** depends on the strength of the body materials. For the currently preferred Dupont Zytel material, having material density of approximately 1.39 g/cc, a tensile modulus at approximately 1520kpsi, and an impact strength of approximately 80kj/m², material can be removed in the configuration shown to form the recesses. The surface web **62** preferably has a thickness which is approximately 8% of the overall thickness. Again, it should be understood that these figures are not to be construed as a limitation.

The ends of the body outer surface **28** of the rim lock **20** are designed to eliminate the need for a rubber coating, as required by previous metal rim locks, by providing angled end portions **80,** which guide the inflatable tube **4** down into the rim **7** (see Fig. 1). This reduces abrasion and wear on the inflatable tube **4** by the rim lock **20.** Previous rim locks rely on a rubber over-mold process to accomplish this, which increases weight and complexity of the manufacturing.

As seen in Fig. 5, the rim lock curved end portions **80** are designed to fit the curvature of the inflatable tube **4.** The curved end portions **80** are configured with a parabolic curve θ **82,** which guides the inflatable tube **4** to seat properly. The parabolic curve is arranged such that the end portions **80** are tangent to the center both radially and axially, sloping down to the inner surface over a distance of 0.50 to 1.5 inches.

While various embodiments have been described above, it should be understood that they have been presented by way of example only, and not limitation.

### INDUSTRIAL APPLICABILITY

The present rim lock device is well suited generally for preventing damage to the inner tube of a vehicle tire by preventing the tire from slipping on the wheel. It accomplishes this by clamping the bead of the tire to the outer "rim" area of the wheel. It thus prevents the tire from rotating on the rim during hard acceleration or deceleration.

It is well known that the pressure exerted by the inner tube against the side of the tire that presses the side of the tire against the rim of the wheel is not always sufficient to keep the tire from rotating around the rim under hard acceleration or hard deceleration. Movement of the tire on the rim can result in stress on the valve stem of the inflatable tube and in the case of a flat tire, the slippage may be so great on the rear wheel that it may prevent the motorcycle from moving forward and/or come off the rim. Thus, the rim lock is used on the front and rear wheels of motorcycles to "sandwich" the bead of the tire between the rim lock device and the rim so that the tire does not rotate on the rim under acceleration or braking, particularly when the tire is being run with low air pressure or when completely flat.

Figs. 1 and 3 show the rim lock **20** used in context on a vehicle wheel assembly **1.** The wheel assembly **1** with rim lock **20** includes a wheel **2,** a tire **3,** an inflatable tube **4,** (shown only in dashed outline in Fig. 1) and a rim lock **20.** The wheel **2** is configured with an outer surface **5,** an inner surface **6,** and a wheel rim **7.** A tire **3** has a tread surface **8,** and a tire bead **9,** which is captured by the wheel rim **7.** The inflatable tube **4** (which is indicated in dashed lines) is positioned between the tire **3** and the wheel **2** and includes a valve stem **10** (see Fig. 2) which extends through a valve stem port **11** (see Fig. 2) in the wheel **2,** extending in a direction towards the axle of the vehicle. The rim lock **20** is shown mounted in position on the wheel **2**, and includes a main body **22** and a bolt **24,** to which a nut **26** (see Fig. 1) may be attached.

In order to attach the rim lock **20,** the tire **3** and inflatable tube **4** are usually removed from the wheel **2.** A hole for mounting the rim lock **20** is generally fashioned through the wheel **2,** and the bolt **24** of the rim lock **20** is inserted through this hole. The nut **26** is then threaded onto the bolt **24** to secure the rim lock **20** in place on the wheel **2.** The main body **22** of the rim lock **20** is fitted snuggly between the inner surfaces of the tire bead **9.** The body front wall **32** and body rear wall **34** of the main body **22** are configured with recesses **36** and recess channels **38** to create ribs or teeth **52,** which are preferably angled teeth **54,** as can be best seen from Fig. 4. These angled teeth **54** are specially configured to hold the tire **3** in place more securely than previous rim locks. Previous aluminum rim locks have teeth on each side to dig in and hold the bead in place. On previous rim locks these teeth have a uniform rectangular shape. However, the angled teeth **54** of the present invention are preferably both tapered (V shaped) and are also designed to act as a wedge. This allows the rim lock **20** to maximize the bite into the sides of the tire **3** while retaining a high level of strength and durability. As the nut **26** is tightened on the bolt **24,** the rim lock **20** is drawn towards the outer surface **5** of the wheel **2,** and the wedged nature of the angled teeth **54** forces the tire bead **9** tightly against the wheel rim **7,** helping to lock it in place against acceleration and braking forces.

Generally, the rim locks are subjected to a great deal of load and must be able to apply considerable pressure against the tire bead to lock it against the rim of the tire. This requires a high tensile strength. The teeth on the side of the rim lock must hold their shape so they don't just twist and let the tire loose under heavy loads. Lastly, the material may be subject to heavy impact if the tire hits a rock or other object and it needs to be able to handle that as well. Thus, the material must have high properties of strength and toughness, where toughness is defined as a material's ability to absorb impacts as measured in an Izod test

However, as discussed above, the weight and balance of the wheels is important to reduce vibration of the wheel as it rotates. Reducing the weight of the rim lock is very useful because then less counterbalancing wheel weights are required to reduce vibration.

Thus, the material used in the rim locks was chosen for the properties of high strength and toughness while having as little weight as possible. Traditionally, rim locks are made out of steel or aluminum. The inventor was specifically looking for a material that was equal or greater in strength to aluminum with less weight and that could be injection molded to reduce cost over die casting. It was determined that the material should preferably have a density of 1.12 to 1.50 g/cm³ as well as an impact strength greater than 50kj/m². Due to the extreme loads that can be applied to a rim lock, it was necessary to use a material with a tensile modulus greater than 300 kpsi. There are several materials that possess this combination of properties. The currently preferred materials include Nylon 66 (Polyamide 66) plastic material with filler and Dupont Zytel which is a proprietary formulation of Nylon 66 made by DuPont.

Glass filled nylon is impact resistant (more so than regular nylon). It is structurally stronger and stiffer than ABS or regular nylon and shows little thermal expansion (essential to maintain the cast in place attaching bolt during long hard rides that heat up the tire and inner tube). Most importantly, in some formulations of the material, it is lighter than aluminum and yet has sufficient strength to do the job as well as the aluminum rim lock. Zytel is Dupont's proprietary formulation for glass filled nylon that makes it stronger than regular Nylon66. Dupont offers Zytel in a wide variety of formulations. Zytel is rated with a tensile modulus at approximately 1520kpsi, as well as a impact strength of 80kj/m^{2,} and having a material density of 1.39 g/cm³, thus being well within the range of desirable properties.

Another material that could be used is Kevlar filled Nylon.

In addition to the selection of the material, the physical construction of the present rim lock **20** was carefully designed for the strength and reduced weight of the final product. The body **22** preferably has a generally ovoid shape **50,** which is designed to have both utilitarian and aesthetic purposes. The shape and look of the rim lock **20** is streamlined and shaped in an attractive flowing way, which makes the product look interesting and attractive to consumers. It also eliminates sharp edges that could puncture or abrade the inflatable tube **4.**

To further reduce weight, the inner surface **30** of the main body **22** is also preferably configured with recesses **40,** which are preferred to include enlarged outer recesses **42,** located outward radially further from the central bolt **24,** and smaller inner recesses **44** located inward radially closer to the central bolt **24.** These recesses **40** are configured as a matrix structure **60,** which reduces the amount of material, and thus the weight of the rim lock **20.** To further strengthen the structure, the recesses **40** are not configured as through-holes. A surface web **62** is configured on the body outer surface **28,** which both increases the strength greatly and reduces the wear on the inflatable inner tube of the tire.

Additionally, the ends of the body outer surface **28** of the rim lock **20** are designed to eliminate the need for a rubber coating, as required by previous metal rim locks, by providing angled end portions **80,** which guide the inflatable tube **4** down into the rim 7 (see Fig. 1). This reduces abrasion and wear on the inflatable tube **4** by the rim lock **20.** Previous rim locks rely on a rubber over-mold process to accomplish this, which increases weight and complexity of the manufacturing. As seen in Fig. 5, the rim lock curved end portions **80** are designed to fit the curvature of the inflatable tube **4.** The curved end portions **80** are configured with a parabolic curve θ **82**, which guides the inflatable tube **4** to seat properly.

Rim locks can be used in pairs on opposing sides of a wheel, which can help to balance the wheel somewhat, but it is expected that a counterweight may still be used to help balance the overall weight of the tire.

For the above, and other, reasons, it is expected that the rim lock device **20** of the present invention will have widespread industrial applicability. Therefore, it is expected that the commercial utility of the present invention will be extensive and long lasting.

## Claims

1. A rim lock device, comprising:
a main body having an inner surface (30), an outer surface (28), a body front wall (32) and a body rear wall (34); and
a bolt (24); **characterised in that**
said inner surface of said main body includes a plurality of recesses which are configured into a matrix structure.

2. The rim lock device of claim 1, wherein:
said plurality of recesses include inner recesses (44) and outer recesses (42).

3. The rim lock device of claim 1 or 2, wherein:
said body front wall and body rear wall are configured with recess channels (38) which form teeth (52).

4. The rim lock device of any preceding claim, wherein:
said outer surface includes curved end portions.

5. The rim lock device of any preceding claim, wherein:
said main body is roughly oval shaped.

6. The rim lock device of claim 3, wherein:
said teeth (52) are angled in a preferred angle range of 15 degrees to 30 degrees.

7. The rim lock device of claim 3, wherein:
said teeth (52) are tapered in a preferred taper range of 3 degrees to 8 degrees.

8. The rim lock device of any preceding claim, wherein:
said outer surface of said main body includes a plurality of recesses.

9. The rim lock device of claim 8, wherein:
said plurality of recesses are configured into a matrix structure.

10. The rim lock device of any preceding claim, wherein:
said outer surface includes a surface web.

11. The rim lock device of any preceding claim, wherein:
said main body is constructed of material having a material density of 1.12 to 1.5 g/cm³, an impact strength of greater than 50kj/m² and a tensile modulus greater than 300 kpsi.

12. The rim lock device of any preceding claim, wherein:
said main body is composed of material chosen from the group consisting of Nylon 66, (polyamide 66), Dupont Zytel, glass filled Nylon and Kevlar filled Nylon.

## Patentansprüche

1. Wulststoppervorrichtung, umfassend:
einen Hauptkörper mit einer Innenfläche (30), einer Außenfläche (28), einer Körpervorderwand (32) und einer Körperrückwand (34); und
eine Schraube (24); **dadurch gekennzeichnet, dass**
die Innenfläche des Hauptkörpers mehrere Vertiefungen umfasst, die matrizenförmig konfiguriert sind.

2. Wulststoppervorrichtung gemäß Anspruch 1, wobei:
die mehreren Vertiefungen innere Vertiefungen (44) und äußere Vertiefungen (42) umfassen.

3. Wulststoppervorrichtung gemäß Anspruch 1 oder 2, wobei:
die Körpervorderwand und die Körperrückwand mit Vertiefungskanälen (38) konfiguriert sind, die Zähne (52) bilden.

4. Wulststoppervorrichtung gemäß einem der vorhergehenden Ansprüche, wobei:
die Außenfläche Abschnitte mit gekrümmtem Ende umfasst.

5. Wulststoppervorrichtung gemäß einem der vorhergehenden Ansprüche, wobei:
der Hauptkörper in etwa ovalförmig ist.

6. Wulststoppervorrichtung gemäß Anspruch 3, wobei:
die Zähne (52) in einem bevorzugten Winkelbereich von 15 Grad bis 30 Grad gewinkelt sind.

7. Wulststoppervorrichtung gemäß Anspruch 3, wobei:
die Zähne (52) in einem bevorzugten Konizitätsbereich von 3 Grad bis 8 Grad kegelförmig sind.

8. Wulststoppervorrichtung gemäß einem der vorhergehenden Ansprüche, wobei:
die Außenfläche des Hauptkörpers mehrere Vertiefungen enthält.

9. Wulststoppervorrichtung gemäß Anspruch 8, wobei:
die mehreren Vertiefungen matrizenförmig konfiguriert sind.

10. Wulststoppervorrichtung gemäß einem der vorhergehenden Ansprüche, wobei:
die Außenfläche ein Oberflächennetz beinhaltet.

11. Wulststoppervorrichtung gemäß einem der vorhergehenden Ansprüche, wobei:
der Hauptkörper aus einem Material mit einer Dichte von 1,12 bis 1,5 g/cm³, einer Schlagfestigkeit von über 50 kJ/m² und einem Zugmodul von über 300 kpsi hergestellt ist.

12. Wulststoppervorrichtung gemäß einem der vorhergehenden Ansprüche, wobei:
der Hauptkörper aus einem Material besteht, das aus folgender Gruppe gewählt wurde: Nylon 66, (Polyamid 66), Dupont Zytel, glasfaserverstärktes Nylon und kevlarverstärktes Nylon.

## Revendications

1. Dispositif bloque-talons comprenant :
un corps principal ayant une surface interne (30), une surface externe (28),
une paroi avant du corps (32) et une paroi arrière du corps (34) ; et
un boulon (24);
**caractérisé en ce que** ladite surface interne dudit corps principal comporte une pluralité d'évidements qui sont configurés en une structure de matrice.

2. Dispositif bloque-talons selon la revendication 1, dans lequel :
ladite pluralité d'évidements comprend des évidements internes (44) et des évidements externes (42).

3. Dispositif bloque-talons selon la revendication 1 ou 2, dans lequel :
ladite paroi avant du corps et ladite paroi arrière du corps sont configurées avec des gorges d'évidement (38) qui forment des dents (52).

4. Dispositif bloque-talons selon l'une quelconque des revendications précédentes, dans lequel :
ladite surface externe comporte des parties externes courbes.

5. Dispositif bloque-talons selon l'une quelconque des revendications précédentes, dans lequel :
ledit corps principal a une forme à peu près ovale.

6. Dispositif bloque-talons selon la revendication 3, dans lequel :
lesdites dents (52) sont formées à un angle situé dans une plage préférée située entre 15 degrés et 30 degrés.

7. Dispositif bloque-talons selon la revendication 3, dans lequel :
lesdites dents (52) sont diminuées progressivement dans une plage de diminution préférée située entre 3 degrés et 8 degrés.

8. Dispositif bloque-talons selon l'une quelconque des revendications précédentes, dans lequel :
ladite surface externe dudit corps principal comporte une pluralité d'évidements.

9. Dispositif bloque-talons selon la revendication 8, dans lequel :
ladite pluralité d'évidements sont configurés en une structure de matrice.

10. Dispositif bloque-talons selon l'une quelconque des revendications précédentes, dans lequel :
ladite surface externe comporte une âme de surface.

11. Dispositif bloque-talons selon l'une quelconque des revendications précédentes, dans lequel :
ledit corps principal est construit en une matière ayant une masse volumique de 1,12 à 1,5 g/cm³, une résistance à l'impact supérieure à 50 kj/m² et un module d'élasticité en traction supérieur à 300 kpsi.

12. Dispositif bloque-talons selon l'une quelconque des revendications précédentes, dans lequel :
ledit corps principal est composé d'une matière choisie parmi le groupe comprenant le Nylon 66, (polyamide 66), le Dupont Zytel, le Nylon chargé de verre et le Nylon chargé de Kevlar.
